Europäisches Patentamt

European Patent Office

Office européen des brevets

(11) Numéro de publication: **0 294 553 B1**

(19)

## (12) FASCICULE DE BREVET EUROPEEN

(45) Date de publication de fascicule du brevet: **20.05.92**  (51) Int. Cl.⁵: **H01M 6/32**

(21) Numéro de dépôt: **88105461.3**

(22) Date de dépôt: **06.04.88**

(54) **Pile amorçable mettant en oeuvre les couples lithium/chlorure de thionyle ou lithium/chlorure de sulfuryle.**

(30) Priorité: **13.04.87 FR 8705203**

(43) Date de publication de la demande:
**14.12.88 Bulletin 88/50**

(45) Mention de la délivrance du brevet:
**20.05.92 Bulletin 92/21**

(84) Etats contractants désignés:
**DE FR GB IT**

(56) Documents cités:
**WO-A-84/02428**
**FR-A- 2 270 685**
**US-A- 3 713 413**
**US-A- 4 200 684**

**PATENT ABSTRACTS OF JAPAN, vol. 6, no. 189 (E-133)[1067], 28 septembre 1982; & JP-A-57 103 271 (YUASA DENCHI K.K.) 26-06-1982**

(73) Titulaire: **SAFT (inscrite au Registre du Commerce sous le numéro 343 588 737)**
**156 avenue de Metz**
**F-93230 Romainville(FR)**

(72) Inventeur: **Descroix, Jean-Pierre**
**16bis, rue de Neuilly**
**F-94120 Fontenay sous Bois(FR)**
Inventeur: **Leben, Yannick**
**10, rue Albert Laurenson**
**F-93000 Bobigny(FR)**

(74) Mandataire: **Weinmiller, Jürgen et al**
**Lennéstrasse 9 Postfach 24**
**W-8133 Feldafing(DE)**

## Description

La présente invention concerne une pile amorçable mettant en oeuvre les couples $Li/SOCl_2$ ou $Li/SO_2Cl_2$ et destinée notamment à la propulsion des véhicules sous-marins.

Une telle pile comporte très schématiquement :
- un bloc électrochimique constitué par un grand nombre de couples électrochimiques,
- un réseau pour irriguer en électrolyte lesdits couples électrochimiques,
- un échangeur thermique pour évacuer vers l'extérieur les calories dégagées au moment de la décharge,
- une pompe pour assurer la circulation de l'électrolyte dans le réseau d'irrigation et ledit échangeur thermique,
- un dispositif de stockage et de transfert d'électrolyte vers ledit bloc électrochimique au moment de l'amorçage, comprenant un réservoir d'électrolyte connecté d'une part à un générateur de gaz et d'autre part à une entrée de ladite pompe.

Un problème posé lors du fonctionnement d'une telle pile est l'alimentation de la pompe, lorsque le véhicule propulsé par la pile, pour modifier sa profondeur d'immersion, est soumis à des inclinaisons importantes de l'ordre de 45 degrés ; l'alimentation de la pompe doit être également assurée quelles que soient les variations de volume de l'électrolyte dans le bloc électrochimique au cours de la décharge, variations dûes par exemple aux variations de température et aux variations des volumes molaires.

La présente invention a pour but de réaliser une pile amorçable mettant en oeuvre des couples $Li/SOCl_2$ ou $Li/SO_2Cl_2$ dont la structure permette de résoudre le problème précédent.

La présente invention a pour objet une pile amorçable mettant en oeuvre les couples $Li/SOCl_2$ ou $Li/SO_2Cl_2$ comportant :
- un bloc électrochimique comprenant un grand nombre de couples,
- un réseau pour irriguer les couples dudit bloc,
- un échangeur thermique,
- une pompe pour assurer la circulation de l'électrolyte dans ledit réseau et ledit échangeur thermique,
- un dispositif de stockage et de transfert d'électrolyte vers ledit bloc, comportant un réservoir d'électrolyte connecté d'une part à un générateur de gaz et d'autre part à l'entrée de la pompe de circulation, caractérisée par le fait que ledit générateur de gaz est relié à la partie supérieure dudit réservoir d'électrolyte,

que ce réservoir est constitué de deux compartiments, un compartiment principal relié audit générateur de gaz et un compartiment "tampon" relié à ladite pompe, séparé du compartiment principal par une cloison non étanche munie à sa partie supérieure d'une crépine aboutissant à la partie inférieure dudit compartiment principal.

Selon un perfectionnement destiné à améliorer la sécurité de l'amorçage, ledit générateur de gaz associé à un poinçon pyrotechnique destiné à assurer son ouverture est relié audit compartiment principal par une vanne commandable, dont la sortie reliée audit compartiment comporte une membrane d'éclatement et qui est munie d'une autre sortie vers l'extérieur de la pile.

Selon un autre perfectionnement destiné encore à l'amélioration de la sécurité, ledit compartiment "tampon" est relié à l'entrée de ladite pompe par un conduit comportant un opercule associé à un poinçon pyrotechnique, ledit opercule étant suivi d'une membrane d'éclatement.

Afin d'assurer une irrigation homogène de tous les couples dudit bloc quelle que soit la position de la pile, la quantité d'électrolyte contenue avant l'amorçage dans ledit réservoir d'électrolyte est telle qu'après amorçage il reste dans le compartiment "tampon" une quantité d'électrolyte suffisante pour que ladite pompe soit toujours amorcée.

Par ailleurs, le volume de gaz contenu dans ledit générateur de gaz est tel qu'après amorçage la pression dans ledit réservoir d'électrolyte soit de l'ordre de quelques bars.

De préférence, il est prévu une vanne thermostatique comportant au moins une entrée d'électrolyte chaud sorti du bloc électrochimique et au moins une entrée d'électrolyte froid issu dudit échangeur thermique, la sortie de ladite vanne étant reliée à l'entrée dudit bloc électrochimique.

D'autres caractéristiques et avantages de la présente invention apparaîtront au cours de la description suivante d'un mode de réalisation donné à titre illustratif mais nullement limitatif et dans lequel :
- la figure 1 est une vue schématique en coupe de l'ensemble d'une pile selon l'invention,
- la figure 2 est une vue schématique en coupe du réservoir d'électrolyte et du système d'amorçage d'une pile selon l'invention,
- la figure 3 est une vue schématique du générateur de gaz apparaissant dans la figure 2.

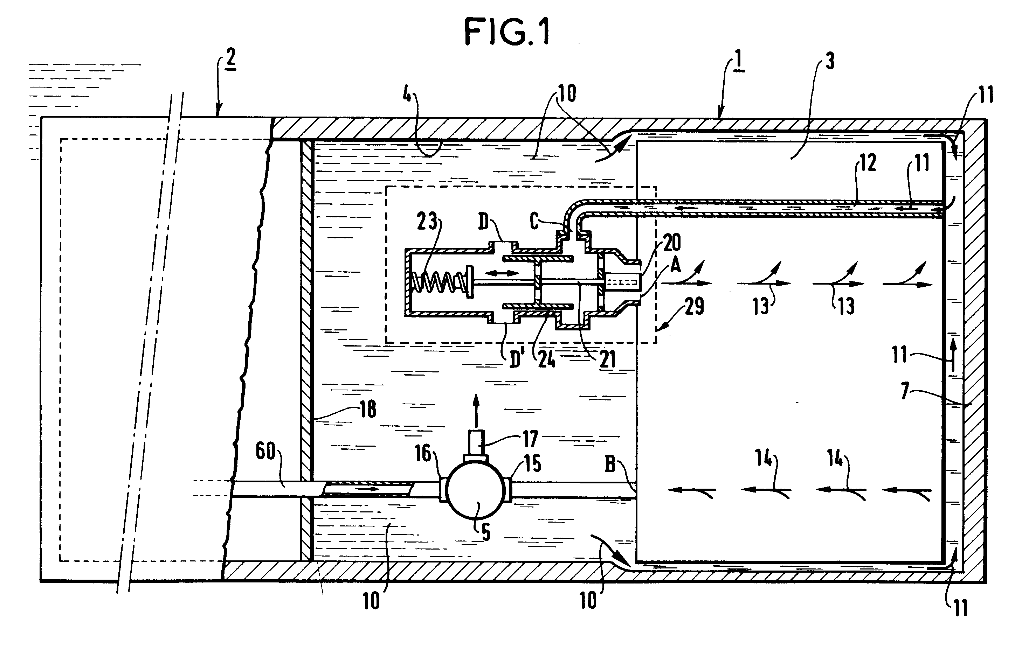

On voit dans la figure 1 une pile selon l'invention formée d'un ensemble 1 contenant le bloc électrochimique 3 proprement dit et un dispositif 2 pour le stockage et le transfert de l'électrolyte vers le bloc 3.

Pour la clarté de la description, on a montré dans la figure 1 l'ensemble 1 après que le transfert de l'électrolyte 10 ait eu lieu par l'intermédiaire du conduit 60, c'est-à-dire pendant la décharge de la pile.

L'ensemble de la pile est logé dans une enveloppe métallique 4. Le bloc électrochimique 3 est formé d'un empilage de couples électrochimiques et comporte un réseau pour l'irrigation de ces couples en électrolyte 10, cet électrolyte entrant dans le bloc par l'entrée A et en ressortant par la sortie B, une pompe 5 assurant la circulation ; on a référencé 15 et 16 deux entrées et 17 une sortie de la pompe 5.

A titre d'exemple chaque couple électrochimique comporte :
- une cathode poreuse en carbone d'épaisseur 0,35 mm
- une anode de lithium d'épaisseur 0,15 mm
- des collecteurs de courant en nickel d'épaisseur 0,05 mm
- un séparateur d'épaisseur 0,20 mm.

L'électrolyte qui entre en A dans le bloc électrochimique a sa température régulée grâce à un échangeur thermique et à une vanne thermostatique 29. L'électrolyte 10 en circulation grâce à la pompe 5, passe autour du bloc 3 contre la paroi 7 de l'enveloppe 4 qui est en contact avec le milieu extérieur, généralement la mer. A ce niveau l'électrolyte 10 se refroidit et l'électrolyte froid référencé 11 aboutit par une conduite 12 à une entrée C de la vanne thermostatique 29. Cette dernière possède d'autres entrées D, D', pour l'électrolyte chaud 10 ; elle est munie d'une capsule thermostatique 20 et d'une tige mobile 21 coopérant par l'intermédiaire d'un ressort de rappel 23 avec un piston 24. Le piston 24 est susceptible d'obturer plus ou moins les entrées D, D' et C.

Selon la température de régulation, le mélange électrolyte chaud - électrolyte refroidi change à l'entrée A du bloc électrochimique 3. On a référencé schématiquement par des flèches 13 les trajets de l'électrolyte pour entrer dans les couples et les irriguer, et par des flèches 14, les trajets de sortie de l'électrolyte.

Selon un perfectionnement non illustré, la puissance de la pompe 5 est régulée en fonction de la température de l'électrolyte 10, ou en fonction de l'écart entre la température de l'électrolyte 10 et celle de l'électrolyte 11.

On va décrire maintenant la phase d'amorçage de la pile et le dispositif 2 de stockage et de transfert d'électrolyte séparé de l'ensemble 1 par une cloison 18.

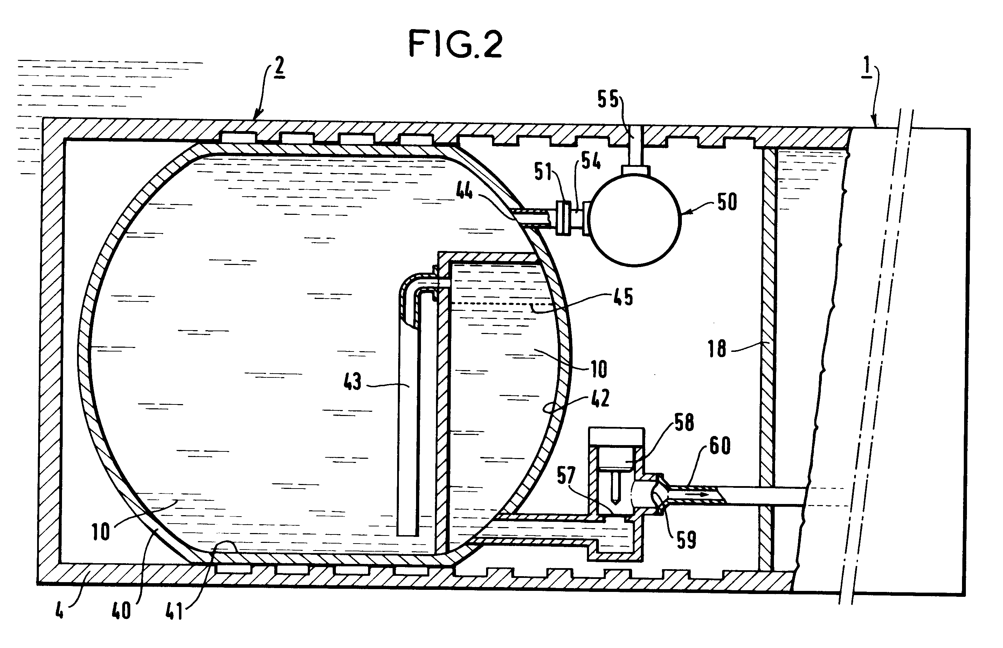

On voit dans la figure 2 un réservoir d'électrolyte formé par une enveloppe 40 en acier inoxydable, dont l'épaisseur est de l'ordre de 1 mm. Il comporte un compartiment principal 41 et un compartiment tampon 42 muni à sa partie supérieure d'une crépine 43 aboutissant à la partie inférieure du compartiment 42. Pendant le stockage de la pile les deux compartiments sont totalement remplis d'électrolyte 10. La figure 2 montre un exemple de l'état de remplissage (niveau en pointillés référencé 45) du compartiment 42 après l'amorçage et pendant la décharge de la pile.

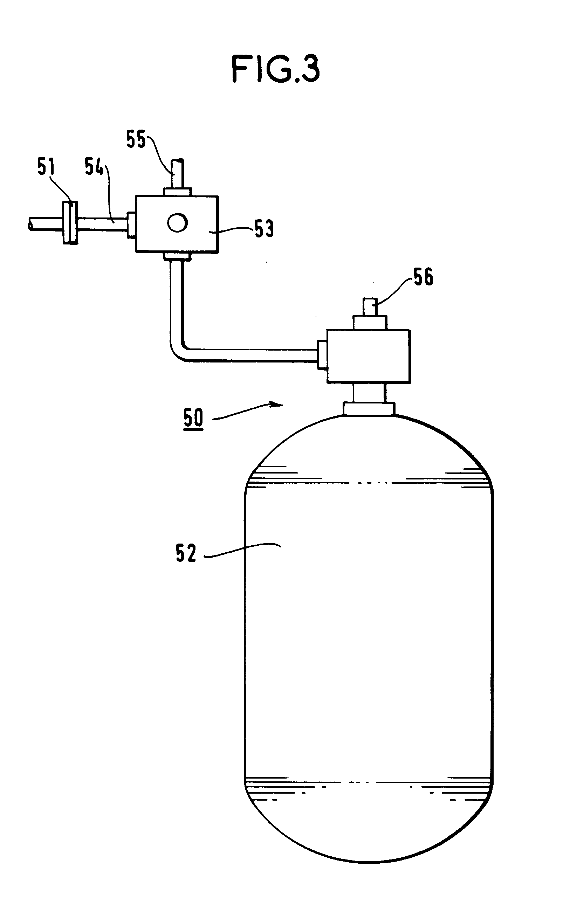

Un générateur de gaz schématisé par la boîte 50 et vu plus en détail dans la figure 3 est relié à la partie supérieure 44 du compartiment principal 41 par l'intermédiaire d'une membrane d'éclatement 51. On voit dans la figure 3 que le générateur de gaz 50 comporte un réservoir de gaz proprement dit 52 relié à une vanne de sécurité commandable 53 ; cette vanne a d'une part une sortie 54 vers la membrane d'éclatement 51 et le compartiment 41 et d'autre part une sortie de sécurité 55 vers l'extérieur de la pile. L'ouverture du réservoir de gaz 52 est assurée par un poinçon pyrotechnique 56.

Le volume du gaz contenu dans le réservoir est suffisant pour maintenir, après le transfert de l'électrolyte dans le bloc électrochimique 3, une pression résiduelle, par exemple de l'ordre de 6 bars, dans le compartiment 41.

Le réservoir d'électrolyte 40 doit être parfaitement étanche pendant toute la durée de stockage de la pile. A sa partie basse il est fermé par un opercule 57 en acier inoxydable associé à un poinçon pyrotechnique 58. L'accès par la conduite 60 vers le bloc électrochimique est fermé par une membrane d'éclatement 59. Il s'agit d'une barrière de sécurité supplémentaire.

Au moment de l'amorçage, après que l'on ait correctement positionné la vanne 53, les poinçons pyrotechniques 56 et 58 fonctionnent, les membranes 51, 57 et 59 s'ouvrent, l'électrolyte chassé par le gaz du générateur amorce la pompe 5 qui vide le compartiment 41 et assure la circulation de l'électrolyte dans le bloc électrochimique 3. Pour des inclinaisons importantes de la pile dans son milieu extérieur, par exemple de l'ordre de 45 degrés, et quel que soit l'état de la décharge, il reste toujours suffisamment d'électrolyte dans le compartiment "tampon" 42 pour que la pompe 5 reste toujours amorcée.

A titre d'exemple, pour un volume total d'électrolyte de 80 litres, le volume du compartiment tampon est de l'ordre de 15 litres et le volume d'électrolyte restant dans ce compartiment pendant la décharge est de l'ordre de 5 litres.

Pendant la décharge de la pile, on peut envisager une circulation d'électrolyte dans le bloc de l'ordre de 6 litres par seconde.

La température moyenne de l'électrolyte à l'entrée A du bloc est de l'ordre de 40°C.

La puissance de la pile est de l'ordre de 300 Kwatts.

Bien entendu ce mode de réalisation n'est donné qu'à titre d'exemple. On pourra sans sortir du cadre de l'invention remplacer tout moyen par un moyen équivalent.

**Revendications**

1. Pile amorçable mettant en oeuvre les couples Li/SOCl$_2$ ou Li/SO$_2$Cl$_2$ comportant :
   - un bloc électrochimique (3) comprenant un grand nombre de couples,
   - un réseau pour irriguer les couples dudit bloc,
   - un échangeur thermique (7),
   - une pompe (5) pour assurer la circulation de l'électrolyte (10) dans ledit réseau et ledit échangeur thermique,
   - un dispositif de stockage et de transfert d'électrolyte vers ledit bloc (3), comportant un réservoir d'électrolyte connecté d'une part à un générateur de gaz (50) et d'autre part à une entrée de la pompe de circulation (5),

   caractérisée par le fait que ledit générateur de gaz est relié à la partie supérieure dudit réservoir d'électrolyte,
   que ce réservoir est constitué de deux compartiments, un compartiment principal (41) relié audit générateur de gaz (50) et un compartiment "tampon" (42) relié à ladite pompe, séparé du compartiment principal par une cloison non étanche munie à sa partie supérieure d'une crépine (43) aboutissant à la partie inférieure dudit compartiment principal (41).

2. Pile amorçable selon la revendication 1, caractérisée par le fait que ledit générateur de gaz (50) associé à un poinçon pyrotechnique destiné à assurer son ouverture est relié audit compartiment principal (41) par une vanne commandable (53), dont la sortie reliée audit compartiment comporte une membrane d'éclatement (51) et qui est munie d'une autre sortie (55) vers l'extérieur de la pile.

3. Pile amorçable selon l'une des revendications 1 et 2, caractérisée par le fait que ledit compartiment "tampon" (42) est relié à l'entrée de ladite pompe par un conduit comportant un opercule (57) associé à un poinçon pyrotechnique, ledit opercule étant suivi d'une membrane d'éclatement (59).

4. Pile amorçable selon l'une des revendications précédentes caractérisée par le fait que la quantité d'électrolyte contenue avant l'amorçage, dans ledit réservoir d'électrolyte est telle qu'après amorçage il reste dans le compartiment "tampon" une quantité d'électrolyte suffisante pour que ladite pompe soit toujours amorçée.

5. Pile amorçable selon l'une des revendications précédentes caractérisée par le fait que le volume de gaz contenu dans ledit générateur de gaz est tel qu'après amorçage la pression dans ledit réservoir d'électrolyte soit de l'ordre de quelques bars.

6. Pile amorçable selon l'une des revendications précédentes caractérisée par le fait qu'elle est munie d'une vanne thermostatique (29) comportant au moins une entrée d'électrolyte chaud sorti du bloc électrochimique et au moins une entrée d'électrolyte froid issu dudit échangeur thermique, la sortie de ladite vanne étant reliée à l'entrée dudit bloc électrochimique (3).

**Claims**

1. An activatable battery using the Li/SOCl$_2$ or Li/SO$_2$Cl$_2$ system, and comprising
   - an electrochemical block (3) comprising a large number of cells,
   - a network for irrigating the cells in said block,
   - a heat exchanger (7),
   - a pump (5) for causing electrolyte (10) to circulate through said network and said heat exchanger, and
   - a device for storing electrolyte and transferring it to said block (3), said device including a supply of electrolyte which is connected firstly to a gas generator (50), and secondly to the inlet of the circulation pump (5),

   the activatable battery being characterized in that said gas generator is connected to the top portion of said electrolyte supply, that the supply is split into two compartments, a main compartment (41) connected to said gas generator (50) and a "buffer" compartment (42) connected to said pump, said buffer compartment being separated from the main compartment by a non-electrolyte-proof partition provided at its top with a dip tube (43) ending in the bottom portion of said main compartment.

2. An activatable battery according to claim 1, characterized in that said gas generator (50) associated with a pyrotechnical punch for opening it is connected to said main compartment (41) via a controllable valve (53) whose output connected to said compartment includes a burstable membrane (51) and which is provided with another outlet (55) leading to the outside of the battery.

3. An activatable battery according to claim 1 or 2, characterized in that said "buffer" compartment (42) is connected to the inlet of said pump via a duct including an inner capsule (57) associated with a pyrotechnical punch, said capsule being followed by a burstable membrane (59).

4. An activatable battery according to any one of the preceding claims, characterized in that the quantity of electrolyte contained prior to activation in said eletcrolyte supply is such that after activation there remains a sufficient quantity of electrolyte in said "buffer" compartment to ensure that the pump is always primed.

5. An activatable battery according to any one of the preceding claims, characterized in that the volume of gas contained in said gas generator is such that after activation, the pressure in said electrolyte supply is a few bars.

6. An activatable battery according to any one of the preceding claims, characterized in that it is provided with a thermostatic valve (29) including at least one inlet for hot electrolyte leaving the electrochemical block and at least one inlet for cold electrolyte leaving said heat exchanger, with the outlet from said valve being connected to the inlet of said electrochemical block (3).

**Patentansprüche**

1. Aktivierbare Batterie, bestehend aus dem galvanischen Paar Li/SOCl$_2$ oder Li/SO$_2$Cl$_2$, die folgende Komponenten aufweist:
   - einen elektrochemischen Block (3) mit einer großen Anzahl von galvanischen Zellen,
   - ein Verteilungsnetz zur Beschickung der Zellen des Blocks mit Flüssigkeit,
   - einen Wärmetauscher (7),
   - eine Pumpe (5) zum Umwälzen des Elektrolyten (10) im Verteilungsnetz und im Wärmetauscher,
   - eine Anordnung zum Speichern und Fördern des Elektrolyten in den Block (3), mit einem Elektrolytvorratsbehälter, der einerseits an einen Gasgenerator (50) und andererseits an den Einlaß der Umwälzpumpe (5) angeschlossen ist,
   
   dadurch gekennzeichnet, daß der Gasgenerator mit dem oberen Bereich des Elektrolytvorratsbehälters verbunden ist, daß der Vorratsbehälter aus zwei Kammern besteht, einer mit dem Gasgenerator (50) verbundenen Hauptkammer (41), und einer mit der Pumpe verbundenen "Pufferkammer" (42), die von der Hauptkammer durch eine nicht dichte Zwischenwand getrennt ist, welche in ihrem oberen Bereich ein Saugrohr (43) aufweist, das im unteren Abschnitt der Hauptkammer (41) endet.

2. Aktivierbare Batterie nach Anspruch 1, dadurch gekennzeichnet, daß der Gasgenerator (50), der mit einem pyrotechnischen Durchschlagorgan zu seiner Öffnung verbunden ist, mit der Hauptkammer (41) über ein steuerbares Ventil (53) verbunden ist, dessen mit der Hauptkammer verbundener Auslaß eine Berstmembran (51) aufweist und das einen nach außerhalb der Batterie führenden weiteren Auslaß (55) besitzt.

3. Aktivierbare Batterie nach Anspruch 1, oder 2, dadurch gekennzeichnet, daß die "Pufferkammer" (42) an den Eingang der Pumpe über eine einen Deckel (57) und ein pyrotechnisches Durchschlagorgan enthaltende Leitung angeschlossen ist, wobei dem Deckel eine Berstmembran (59) nachgeschaltet ist.

4. Aktivierbare Batterie nach einem der vorhergehenden Ansprüche, dadurch gekennzeichnet, daß die vor der Aktivierung im Elektrolytvorratsbehälter befindliche Elektrolytmenge so bemessen ist, daß nach der Aktivierung in der "Pufferkammer" eine Elektrolytmenge verbleibt, die ausreicht, damit die Pumpe jederzeit förderfähig ist.

5. Aktivierbare Batterie nach einem der vorhergehenden Ansprüche, dadurch gekennzeichnet, daß das im Gasgenerator enthaltene Gasvolumen so bemessen ist, daß nach der Aktivierung der Druck im Elektrolytvorratsbehälter einige Bar beträgt.

6. Aktivierbare Batterie nach einem der vorhergehenden Ansprüche, dadurch gekennzeichnet, daß sie mit einem Thermostatventil (29) versehen ist, das mindestens einen Einlaß für den aus dem elektrochemischen Block kommenden heißen Elektrolyten und mindestens einen Einlaß für den aus dem Wärmetauscher kommenden kalten Elektrolyten aufweist, wobei der Auslaß des Ventils an den Einlaß des elektrochemischen Blocks (3) angeschlossen ist.

# FIG.1

EP 0 294 553 B1

# FIG.2

EP 0 294 553 B1

# FIG.3